# EUROPEAN PATENT APPLICATION

(11) **EP 3 349 415 A1**
(43) Date of publication of application: **18.07.2018**
(21) Application number: 15904377.7
(22) Date of filing: 23.09.2015
(51) Int. Cl.: H04L 29/08, H04L 29/06

(54) **SCHEDULING ASSIGNMENT PROCESSING METHOD, APPARATUS AND DEVICE**

(71) Applicant: Huawei Technologies Co., Ltd., Longgang District Shenzhen, Guangdong 518129 (CN)
(72) Inventor: ZHANG, Xingwei, Shenzhen Guangdong 518129 (CN); LI, Chao, Shenzhen Guangdong 518129 (CN)
(74) Representative: Epping - Hermann - Fischer
(86) International application number: PCT/CN2015/090419
(87) International publication number: WO 2017/049490

(57) **Abstract**

The present invention relates to device-to-device (D2D) communications technologies, and in particular, to a control signaling processing method, apparatus, and device. A control signaling receiving method is applied to a D2D communication process. The method includes: receiving, by a second device, control signaling (SA) sent by a first device, where the SA carries attribute identification information of service data that the first device needs to send; determining, by the second device according to the attribute identification information, whether the service data is data required by the second device; and receiving, by the second device, the service data if the service data is the data required by the second device. The control signaling processing method, apparatus, and device of the present invention are applied, to selectively receive or demodulate service data, and reduce reception complexity and power consumption of receiver UE.

## Description

### TECHNICAL FIELD

The present invention relates to device-to-device D2D communications technologies, and in particular, to a control signaling processing method, apparatus, and device.

### BACKGROUND

The Long Term Evolution Advanced (Long Term Evolution-Advanced, LTE-A) Rel-10/11/12/13 release of the 3rd Generation Partnership Project (3rd Generation Partnership Project, 3GPP) is an enhancement of the Long Term Evolution (Long Term Evolution, LTE) Rel-8/9 release. An LTE-A system has a higher bandwidth requirement than an LTE system, and supports a peak data rate up to 1 G/s in downlink and 500 M/s in uplink. To meet a requirement of LTE-A, in the LTE-A system, a carrier aggregation (Component Aggregation, CA) technology is used as a method for expanding system bandwidth of the LTE-A system, and a multi-antenna enhancement technology (multiple-input multiple-output, Multiple-Input Multiple-Output, MIMO) and a coordinated multi-point (Coordinated Multi-Point, CoMP) technology are used to improve a data rate and system performance.

Although various technologies are used in LTE-A to improve the data rate, with rapid development of wireless communications and emergence of ultra-high-rate services (such as high-definition videos), load of a wireless communications network becomes heavier. How to reduce network load becomes a hot topic of research. D2D (Device to Device, device-to-device) communication emerges accordingly, and becomes a key project of the LTE-A Rel-12/13 release. In this direct-connection device communication mode, user equipment (User Equipment, UE) and UE may directly communicate with each other, without a need of forwarding by an evolved NodeB (Evolved Node B, eNodeB), so that data load of the eNodeB is shared. During D2D communication, a spectrum resource can be better utilized, to improve spectrum utilization and a data rate, and reduce load of the eNodeB.

In a D2D communication process, transmitter UE first sends control signaling (Scheduling Assignment, SA), where the SA carries related information of service data, such as an identification ID, and then sends the service data. Receiver UE first receives the SA by means of blind detection. If the ID in the received SA matches at least one ID in an ID list of the receiver UE, the receiver UE continues to receive the service data according to the related information in the SA. If the service data and the SA are in a same subframe, the receiver UE demodulates/decodes the service data cached in the subframe.

In the D2D communication process, there may be a case in which the ID in the control signaling received by the receiver UE matches the at least one ID in the ID list, but the service data scheduled by using, corresponding to, or associated with the control signaling is not data required by the receiver UE. However, the receiver UE still continues to receive or demodulate/decode the service data. This increases reception complexity and power consumption of the receiver UE.

### SUMMARY

Embodiments of the present invention provide a control signaling processing method, apparatus, and device, to selectively receive or demodulate service data, and reduce reception complexity and power consumption of receiver UE.

According to a first aspect, an embodiment of the present invention provides a control signaling receiving method, where the method is applied to a device-to-device D2D communication process, and the method includes:
receiving, by a second device, control signaling SA sent by a first device, where the SA carries attribute identification information of service data that the first device needs to send;
determining, by the second device according to the attribute identification information, whether the service data is data required by the second device; and
receiving, by the second device, the service data if the service data is the data required by the second device.

Optionally, the SA further carries an identification ID of a target device; and
the method further includes:
determining, by the second device according to the ID of the target device, whether the second device is a target device that the first device needs to communicate with; and
receiving, by the second device, the service data if the second device is the target device that the first device needs to communicate with and the service data is the data required by the second device.

Optionally, the SA further carries an identification ID of a source device; and
the method further includes:
determining, by the second device according to the ID of the source device, whether the first device is a device that the second device needs to communicate with; and
receiving, by the second device, the service data if the first device is the device that the second device needs to communicate with and the service data is the data required by the second device.

Optionally, the attribute identification information includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

Optionally, the attribute identification information is located in at least one of the following fields of the SA:
a modulation and coding scheme MCS field;
some code bits of a timing advance TA field; or
a time position of data resource T-RPT field.

Optionally, the determining, by the second device according to the attribute identification information, whether the service data is data required by the second device includes:
determining, by the second device according to the attribute identification information, whether the service data meets a receiving condition that is preset by the second device; and
if the service data meets the receiving condition that is preset by the second device, determining that the service data is the data required by the second device.

Optionally, the receiving, by the second device, the service data includes:
receiving, by the second device, the service data according to the SA, and decoding the received service data; or
decoding, by the second device, the service data that has been received or cached by the second device.

Optionally, the first device is a roadside unit RSU, and the second device is a vehicle; and
correspondingly, the attribute identification information includes information used to identify whether the RSU is an evolved NodeB or a non-mobile device other than an evolved NodeB; or
the first device is a vehicle, and the second device is a roadside unit RSU; and
correspondingly, the attribute identification information includes information used to identify whether the RSU is an evolved NodeB or a non-mobile device other than an evolved NodeB; or
the first device is a road user, and the second device is a vehicle; and
correspondingly, the attribute identification information includes information used to identify an individual type of the road user; or
the first device is a vehicle, and the second device is a road user; and
correspondingly, the attribute identification information includes information used to identify an individual type of the road user; or
both the first device and the second device are vehicles; and
correspondingly, the attribute identification information includes at least one of the following information: information used to identify a location of the first device, information used to identify a moving speed of the first device, information used to identify an acceleration of the first device, information used to identify a motion direction of the first device, or information used to identify a lane in which the first device is located.

According to a second aspect, an embodiment of the present invention provides a control signaling sending method, where the method is applied to a device-to-device D2D communication process, and the method includes:
generating, by a first device, control signaling SA, where the SA carries attribute identification information of service data that needs to be sent; and
sending, by the first device, the SA to at least one second device, where the SA is used by the second device to determine, according to the attribute identification information carried in the SA, whether the service data is data required by the second device, and the second device receives the service data if the service data is the data required by the second device.

Optionally, the SA further carries an identification ID of a target device, and is used by the second device to determine, according to the ID of the target device, whether the second device is a target device that the first device needs to communicate with; and the second device receives the service data if the second device is the target device that the first device needs to communicate with and the service data is the data required by the second device.

Optionally, the SA further carries an identification ID of a source device, and is used by the second device to determine, according to the ID of the source device, whether the first device is a device that the second device needs to communicate with; and the second device receives the service data if the first device is the device that the second device needs to communicate with and the service data is the data required by the second device.

Optionally, the attribute identification information includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

Optionally, the attribute identification information is located in at least one of the following fields of the SA:
a modulation and coding scheme MCS field;
some code bits of a timing advance TA field; or
a time position of data resource T-RPT field.

Optionally, the first device is a roadside unit RSU, and the second device is a vehicle; and
correspondingly, the attribute identification information includes information used to identify whether the RSU is an evolved NodeB or a non-mobile device other than an evolved NodeB; or
the first device is a vehicle, and the second device is a roadside unit RSU; and
correspondingly, the attribute identification information includes information used to identify whether the RSU is an evolved NodeB or a non-mobile device other than an evolved NodeB; or
the first device is a road user, and the second device is a vehicle; and
correspondingly, the attribute identification information includes information used to identify an individual type of the road user; or
the first device is a vehicle, and the second device is a road user; and
correspondingly, the attribute identification information includes information used to identify an individual type of the road user; or
both the first device and the second device are vehicles; and
correspondingly, the attribute identification information includes at least one of the following information: information used to identify a location of the first device, information used to identify a moving speed of the first device, information used to identify an acceleration of the first device, information used to identify a motion direction of the first device, or information used to identify a lane in which the first device is located.

According to a third aspect, an embodiment of the present invention provides a control signaling receiving apparatus, where the apparatus is deployed in a device-to-device D2D communications network, and the apparatus includes:
a first receiving module, configured to receive control signaling SA sent by a first device, where the SA carries attribute identification information of service data that the first device needs to send;
a determining module, configured to determine, according to the attribute identification information, whether the service data is data required by the receiving apparatus; and
a second receiving module, configured to receive the service data when the service data is the data required by the receiving apparatus.

Optionally, the receiving apparatus further includes a first verification module;
the SA further carries an identification ID of a target device, and the first verification module is configured to determine, according to the ID of the target device, whether the receiving apparatus is a target device that the first device needs to communicate with; and
the receiving apparatus receives the service data if the receiving apparatus is the target device that the first device needs to communicate with and the service data is the data required by the receiving apparatus.

Optionally, the receiving apparatus further includes a second verification module;
the SA further carries an identification ID of a source device;
the second verification module is configured to determine, according to the ID of the source device, whether the first device is a device that the receiving apparatus needs to communicate with; and
the receiving apparatus receives the service data if the first device is the device that the receiving apparatus needs to communicate with and the service data is the data required by the receiving apparatus.

Optionally, the attribute identification information includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

Optionally, the attribute identification information is located in at least one of the following fields of the SA:
a modulation and coding scheme MCS field;
some code bits of a timing advance TA field; or
a time position of data resource T-RPT field.

Optionally, the determining module is specifically configured to: determine, according to the attribute identification information, whether the service data meets a receiving condition that is preset by the receiving apparatus; and if the service data meets the receiving condition that is preset by the receiving apparatus, determine that the service data needs to be received.

Optionally, the second receiving module is specifically configured to: receive the service data according to the SA, and decode the received service data; or
the second receiving module is specifically configured to decode the service data that has been received or cached.

Optionally, the first device is a roadside unit RSU, and the receiving apparatus is a vehicle; and
correspondingly, the attribute identification information includes information used to identify whether the RSU is an evolved NodeB or a non-mobile device other than an evolved NodeB; or
the first device is a vehicle, and the receiving apparatus is a roadside unit RSU; and
correspondingly, the attribute identification information includes information used to identify whether the RSU is an evolved NodeB or a non-mobile device other than an evolved NodeB; or
the first device is a road user, and the receiving apparatus is a vehicle; and
correspondingly, the attribute identification information includes information used to identify an individual type of the road user; or
the first device is a vehicle, and the receiving apparatus is a road user; and
correspondingly, the attribute identification information includes information used to identify an individual type of the road user; or
both the first device and the receiving apparatus are vehicles; and
correspondingly, the attribute identification information includes at least one of the following information: information used to identify a location of the first device, information used to identify a moving speed of the first device, information used to identify an acceleration of the first device, information used to identify a motion direction of the first device, or information used to identify a lane in which the first device is located.

According to a fourth aspect, an embodiment of the present invention provides a control signaling sending apparatus, where the apparatus is deployed in a device-to-device D2D communications network, and the apparatus includes:
a control signaling generation module, configured to generate control signaling SA, where the SA carries attribute identification information of service data that needs to be sent; and
a sending module, configured to send the SA to at least one second device, where the SA is used by the second device to determine, according to the attribute identification information carried in the SA, whether the service data is data required by the second device, and the second device receives the service data if the service data is the data required by the second device.

Optionally, the SA further carries an identification ID of a target device, and is used by the second device to determine, according to the ID of the target device, whether the second device is a target device that the sending apparatus needs to communicate with; and the second device receives the service data if the second device is the target device that the sending apparatus needs to communicate with and the service data is the data required by the second device.

Optionally, the SA further carries an identification ID of a source device, and is used by the second device to determine, according to the ID of the source device, whether the sending apparatus is a device that the second device needs to communicate with; and the second device receives the service data if the sending apparatus is the device that the second device needs to communicate with and the service data is the data required by the second device.

Optionally, the attribute identification information includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the sending apparatus;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

Optionally, the attribute identification information is located in at least one of the following fields of the SA:
a modulation and coding scheme MCS field;
some code bits of a timing advance TA field; or
a time position of data resource T-RPT field.

Optionally, the sending apparatus is a roadside unit RSU, and the second device is a vehicle; and
correspondingly, the attribute identification information includes information used to identify whether the RSU is an evolved NodeB or a non-mobile device other than an evolved NodeB; or
the sending apparatus is a vehicle, and the second device is a roadside unit RSU; and
correspondingly, the attribute identification information includes information used to identify whether the RSU is an evolved NodeB or a non-mobile device other than an evolved NodeB; or
the sending apparatus is a road user, and the second device is a vehicle; and
correspondingly, the attribute identification information includes information used to identify an individual type of the road user; or
the sending apparatus is a vehicle, and the second device is a road user; and
correspondingly, the attribute identification information includes information used to identify an individual type of the road user; or
both the sending apparatus and the second device are vehicles; and
correspondingly, the attribute identification information includes at least one of the following information: information used to identify a location of the sending apparatus, information used to identify a moving speed of the sending apparatus, information used to identify an acceleration of the sending apparatus, information used to identify a motion direction of the sending apparatus, or information used to identify a lane in which the sending apparatus is located.

According to a fifth aspect, an embodiment of the present invention provides a terminal device, where the terminal device is deployed in a D2D communications network, and the terminal device includes:
a communications interface, a memory, a processor, and a communications bus, where the communications interface, the memory, and the processor communicate with each other by using the communications bus; and
the memory is configured to store a program, the processor is configured to execute the program stored in the memory, and when the terminal device runs, the processor runs the program, where the program includes:
   receiving control signaling SA sent by a first device, where the SA carries attribute identification information of service data that the first device needs to send;
   determining, according to the attribute identification information, whether the service data is data required by the terminal device; and
   receiving the service data if the service data is the data required by the terminal device.

According to a sixth aspect, an embodiment of the present invention provides a terminal device, where the terminal device is deployed in a D2D communications network, and the terminal device includes:
a communications interface, a memory, a processor, and a communications bus, where the communications interface, the memory, and the processor communicate with each other by using the communications bus; and
the memory is configured to store a program, the processor is configured to execute the program stored in the memory, and when the terminal device runs, the processor runs the program, where the program includes:
   generating control signaling SA, where the SA carries attribute identification information of service data that needs to be sent; and
   broadcasting the SA to at least one second device, where the SA is used by the second device to determine, according to the attribute identification information carried in the SA, whether the service data is data required by the second device, and the second device receives the service data if the service data is the data required by the second device.

According to the control signaling processing method, apparatus, and device in the embodiments of the present invention, the first device is corresponding to transmitter UE, and the second device is corresponding to receiver UE. The second device determines, according to the attribute identification information in the received SA, whether the service data is the data required by the second device. The second device receives only the data required by the second device. This avoids a related-art case in which receiver UE cannot identify an attribute of service data and therefore receives or demodulates data that is not required by the receiver UE. Therefore, a workload of the receiver UE in a data receiving process is reduced, and reception complexity and power consumption of the receiver UE are reduced.

### BRIEF DESCRIPTION OF DRAWINGS

FIG. 1 is a schematic diagram of three types of D2D communication scenarios;
FIG. 2 is a schematic diagram of D2D device communication in a mode 1 mode;
FIG. 3 is a schematic diagram of communication scenarios included in V2X;
FIG. 4 is a schematic diagram of sending SA and service data in a same sub frame;
FIG. 5 is a flowchart of a control signaling receiving method according to Embodiment 1 of the present invention;
FIG. 6 is a flowchart of a control signaling receiving method according to Embodiment 2 of the present invention;
FIG. 7 is a flowchart of a control signaling receiving method according to Embodiment 3 of the present invention;
FIG. 8 is a flowchart of a control signaling sending method according to Embodiment 1 of the present invention;
FIG. 9 is a schematic structural diagram of a control signaling receiving apparatus according to Embodiment 1 of the present invention;
FIG. 10 is a schematic structural diagram of a control signaling sending apparatus according to an embodiment of the present invention;
FIG. 11 is a schematic structural diagram of a terminal device according to Embodiment 1 of the present invention; and
FIG. 12 is a schematic structural diagram of a terminal device according to Embodiment 2 of the present invention.

### DESCRIPTION OF EMBODIMENTS

In an LTE-A (Long Term Evolution-Advanced, Long Term Evolution Advanced) system, to reduce network load, a D2D (Device to Device, device-to-device) communications technology emerges accordingly.

In the D2D communications technology, to improve spectrum utilization and make the best use of a radio frequency capability of existing UE, a spectrum resource of an existing mobile communications network is multiplexed in a D2D communication link. To avoid interfering with UE in the existing mobile communications network, a downlink (a link from an eNB to UE) spectrum resource of the LTE-A system is not used during D2D communication. Instead, only an uplink (a link from the UE to the eNB) spectrum resource of the LTE-A system is multiplexed, because in comparison, interference immunity of the eNB is stronger than interference immunity of the UE.

According to a coverage status of an eNB network signal, D2D communication scenarios may be generally classified into three types: in coverage, partial coverage, and out of coverage.

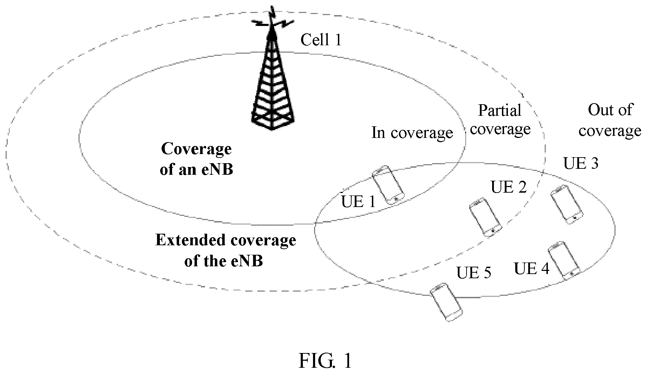

FIG. 1 is a schematic diagram of three types of D2D communication scenarios. In an in-coverage scenario, UE such as UE 1 is in coverage of an eNB. In a partial-coverage scenario, some UEs such as the UE 1 are in the coverage of the eNB, and other UEs such as the UE 2 are not in the coverage of the eNB. In an out-of-coverage scenario, all UEs such as UE 3, UE 4, and UE 5 are out of the coverage of the eNB. For UE, if the UE can obtain an eNB signal by means of listening, the UE is UE in coverage; if the UE can obtain a signal of UE in coverage by means of listening, the UE is UE in partial coverage; if the UE can obtain neither of the foregoing two signals by means of listening, the UE is UE out of coverage.

The D2D communication is classified into two types: D2D device discovery and D2D device communication. In a D2D device discovery process, a discovery signal is sent only on a PSDCH (Physical Sidelink Discovery Channel, physical sidelink discovery channel). In a D2D device communication process, control signaling SA is borne on a PSCCH (Physical Sidelink Control Channel, physical sidelink control channel), and service data is borne on a PSSCH (Physical Sidelink Shared Channel, physical sidelink shared channel). Relative to a UL (Uplink, uplink) and a DL (Downlink, downlink) in LTE, a D2D communication link is referred to as a sidelink (Sidelink, SL).

From a perspective of transmitter UE, currently, there are two resource allocation modes for the D2D device communication. A mode 1 (Mode 1) is a centralized control method. A D2D communication resource is allocated by a central control device (such as an eNB or a relay node). The communication resource is allocated, by means of scheduling, to the transmitter UE for use. The centralized-control resource allocation mainly applies to an in-coverage scenario. A mode 2 (Mode 2) is a contention-based distributed resource multiplexing method. The transmitter UE obtains a communication resource from a resource pool by means of contention. In an in-coverage scenario, the resource pool is a whole block of communication resources that is obtained by an eNB by means of division, and all UEs during the D2D communication contend for small blocks of communication resources in the whole block of communication resources. In an out-of-coverage scenario, the resource pool is a block of predefined system bandwidth, and all D2D users contend for resources in the predefined resource.

Similar to the D2D device communication, there are also two resource allocation types for the D2D device discovery. A type 1 (Type 1) is a contention-based distributed resource multiplexing method. Transmitter UE obtains a transmission resource from a resource pool by means of contention. In an in-coverage scenario, the resource pool is a whole block of resources that is obtained by an eNB by means of division, and all D2D users contend for small blocks of resources in the whole block of resources. In an out-of-coverage scenario, the resource pool is a block of predefined system bandwidth, and all D2D users contend for resources in the predefined resource. A type 2 (Type 2) is a centralized control method. A D2D communication resource is allocated by a central control device (such as an eNB or a relay node). The communication resource is allocated, by means of scheduling, to the transmitter UE for use. The centralized-control resource allocation mainly applies to an in-coverage scenario. For such a contention-based communication resource allocation manner such as the mode 2 or the type 1, due to lack of coordination by a central controller, different UEs may contend for a same resource, and therefore a conflict is caused. When there is a relatively large quantity of UEs, a conflict probability is quite high.

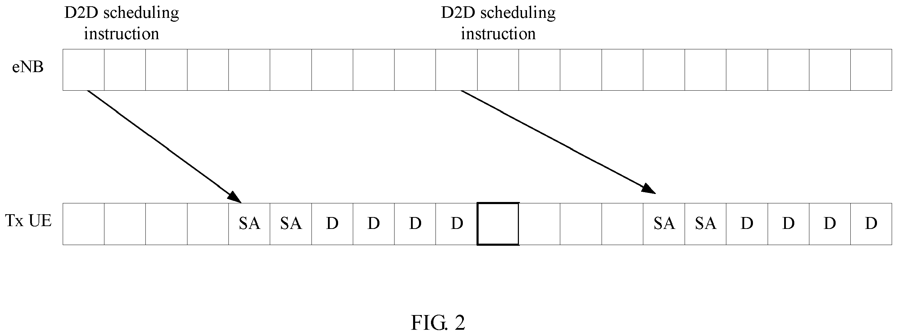

FIG. 2 is a schematic diagram of D2D device communication in a mode 1 mode. It can be learned from FIG. 2 that, for the D2D device communication, in a valid subframe of an uplink scheduling instruction, transmitter UE first repeatedly sends SA twice, where the SA carries related information of service data, and then repeatedly sends the service data four times (the service data is represented by D in FIG. 2), where a communication resource is randomly selected by the Tx UE from a resource pool allocated by an eNB. Receiver UE first blindly detects the SA, and if the SA is correctly received and an ID in the SA matches at least one ID in an ID list of the receiver UE, the receiver UE receives the service data according to the related information that is of the service data and that is carried in the SA. The related information that is of the service data and that is carried in the SA includes a TA (Timing Advance, timing advance), a T-RPT (Time position of data resource, time position of data resource), and the like.

The SA is in an SCI format format. Currently, there is only one format: an SCI format 0. Fields included in the SCI format 0 are shown in Table 1.

**Table 1 Fields of the SCI format 0**

| **Field** | **Quantity of bits** | **Description** |
|---|---|---|
| FH (Frequency Hopping, frequency hopping) | 1 | Whether frequency hopping is used, where a frequency hopping pattern is fixed in a protocol |
| Resource block allocation (a frequency location of a data resource) | 5 to 13 | UL resource allocation type 0 can be reused |
| T-RPT | 7 | Bitmap |
| MCS (Modulation and Coding Scheme, modulation and coding scheme) | 5 | Excluding 64QAM (64-bit quadrature amplitude modulation) |
| TA | 11 | Data reception timing adjustment |
| ID (identification, identification) | 8 | ID of a target device |
| Total | 37 to 45 bits | |

In the Rel-14 release, V2X is a main application of a D2D technology. Based on the existing D2D technology, a specific application requirement of the V2X is optimized in the V2X, so as to further reduce an access delay of a V2X device and resolve a resource conflict problem.

Further, the V2X specifically includes three application requirements: V2V (Vehicle-to-Vehicle, vehicle-to-vehicle), V2P (Vehicle-to-Pedestrian, vehicle-to-pedestrian), and V2I/N. The V2I/N includes V2I (Vehicle-to-Infrastructure, vehicle-to-infrastructure) and V2N (Vehicle-to-Network, vehicle-to-network/evolved NodeB).

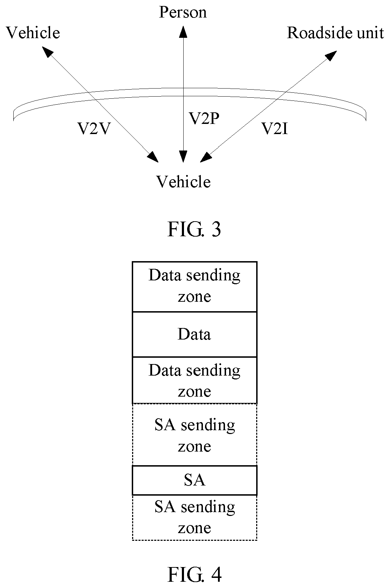

FIG. 3 is a schematic diagram of communication scenarios included in V2X. V2V is vehicle-to-vehicle communication based on an LTE system. V2P is vehicle-to-person (including a pedestrian, a person riding a bicycle, a driver, or a passenger) communication based on an LTE system. V2I is vehicle-to-RSU (Road Side Unit, roadside unit) communication based on an LTE system. In addition, V2N may be included in the V2I, and the V2N is vehicle-to-eNB/network communication based on an LTE system.

There are two types of RSUs: a terminal-type RSU and an eNB-type RSU. The terminal-type RSU is deployed on a roadside, and therefore the terminal-type RSU is in a non-mobile state, and mobility does not need to be considered. The eNB-type RSU can provide timing synchronization and resource allocation for a vehicle that communicates with the eNB-type RSU.

For V2X communication, to meet a delay requirement, transmitter UE may simultaneously send SA and service data in one subframe. As shown in FIG. 4, FIG. 4 is a schematic diagram of sending SA and service data in a same subframe. Receiver UE first blindly detects the SA, and simultaneously needs to cache the service data in the same subframe. If the SA is correctly received and an ID in the SA matches at least one ID in an ID list of the receiver UE, the receiver UE demodulates/decodes the service data cached in the same subframe or receives subsequent service data.

For D2D device communication, transmitter UE first repeatedly sends SA twice, where the SA carries related information of service data, and then repeatedly sends the service data four times. Receiver UE first blindly detects the SA. If the SA is correctly received and an ID in the SA matches at least one ID in an ID list of the receiver ID, the receiver UE receives the service data according to the related information that is of the service data and that is carried in the SA.

For V2X communication, to meet a delay requirement, transmitter UE may simultaneously send SA and service data in one subframe. Receiver UE first blindly detects the SA, and simultaneously needs to cache the service data in the same subframe, because the service data scheduled by using the SA may be in the same subframe. If the SA is correctly received and an ID in the SA matches at least one ID in an ID list of the receiver UE, the receiver UE demodulates/decodes the cached service data or receives subsequent service data.

In the foregoing D2D communication and V2X communication application scenarios, there may be a case in which the receiver UE verifies that the ID in the SA is correct but the service data scheduled by using, corresponding to, or associated with the SA is not data required by the receiver UE. However, the receiver UE still continues to receive or demodulate/decode the service data. As a result, reception complexity and power consumption of the receiver UE are relatively high.

To resolve the foregoing technical problem, the embodiments of the present invention provide a control signaling processing method. The following describes in detail the technical solutions of the present invention with reference to specific embodiments. The following specific embodiments may be combined with each other. A same or similar concept or process may not be described again in some embodiments.

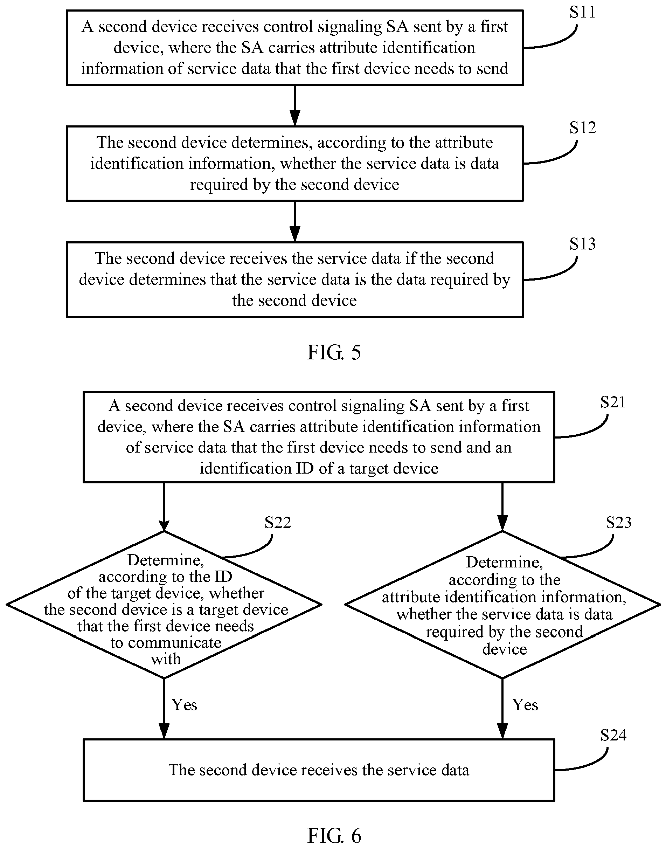

FIG. 5 is a flowchart of a control signaling receiving method according to Embodiment 1 of the present invention. The method is applied to a D2D communication process, and is performed by a second device. The second device is receiver UE. The method in this embodiment includes the following specific steps.

Step S11: The second device receives control signaling SA sent by a first device, where the SA carries attribute identification information of service data that the first device needs to send.

The second device receives, by means of blind detection, the SA sent by the first device. The attribute identification information carried in the SA is used to identify an attribute of the service data scheduled by using, associated with, or corresponding to the SA, for example, identify a type or a data size of the service data, a type of a transmit terminal, or a type of a receive terminal.

Specifically, the attribute identification information may include, according to an actual requirement, at least one of the following information: first identification information, second identification information, third identification information, fourth identification information, fifth identification information, sixth identification information, seventh identification information, eighth identification information, ninth identification information, tenth identification information, eleventh identification information, or twelfth identification information.

The first identification information is used to identify whether the service data is periodically-sent data or event-triggered data. Preferably, the first identification information is further used to identify a transmission interval of the service data or a quantity of times of triggering the service data.

The second identification information is used to identify a transmission interval of the service data or a quantity of times of triggering the service data. The second identification information may be used in combination with the first identification information, or may be used independently. The transmission interval or the quantity of times of triggering the service data is set to imply whether the service data is periodically-sent data or event-triggered data.

The third identification information is used to identify a device type of the first device. For example, the second identification information is used to identify that the type of the first device is a pedestrian in a V2P scenario, a vehicle in a V2V scenario, an RSU in a V2I scenario, or an evolved NodeB/a network in a V2N scenario. The information may occupy approximately two bits. If only common UE or roadside unit RSU-type UE needs to be distinguished, the information may require only one bit.

The fourth identification information is used to identify a device type of a target device. For example, the third identification information may be used to identify that the type of the target device is a pedestrian in a V2P scenario, a vehicle in a V2V scenario, or an RSU in a V2I scenario. If only common UE or roadside unit RSU-type UE needs to be distinguished, the information may require only one bit.

The fifth identification information is used to identify a data type of the service data. For example, the type of the service data may be a CAM (Cooperative Awareness Message, cooperative awareness message) or a DENM (Decentralized Environment Notification Message, decentralized environment notification message), and more specifically, may be an FCW (Forward Collision Warning, forward collision warning), a CLW (Control Loss Warning, control loss warning), an EVW (emergency vehicle warning, emergency vehicle warning), ES (Emergency Stop, emergency stop), CACC (Cooperative Adaptive Cruise Control, cooperative adaptive cruise control), a QW (Queue Warning, queue warning), a WWDW (Wrong way driving warning, wrong way driving warning), a PSW (Pre-crash Sensing Warning, pre-crash sensing warning), a CSW (Curve Speed Warning, curve speed warning), a warning to pedestrian against pedestrian collision (Warning to Pedestrian against Pedestrian Collision), VRU (Vulnerable Road User, vulnerable road user) safety, or the like. A quantity of bits occupied by the information depends on a total quantity of used information types.

The sixth identification information is used to identify an application scenario of the service data. For example, the application scenario of the service data may be a CAM (Cooperative Awareness Message, cooperative awareness message) or a DENM (Decentralized Environment Notification Message, decentralized environment notification message), and more specifically, may be an FCW (Forward Collision Warning, forward collision warning), a CLW (Control Loss Warning, control loss warning), an EVW (emergency vehicle warning, emergency vehicle warning), ES (Emergency Stop, emergency stop), CACC (Cooperative Adaptive Cruise Control, cooperative adaptive cruise control), V2I ES (V2I Emergency Stop, vehicle-to-roadside unit emergency stop), a QW (Queue Warning, queue warning), RSS (Road safety services, road safety services), an APS (Automated Parking System, automated parking system), a WWDW (Wrong way driving warning, wrong way driving warning), vehicle-to-vehicle message transfer under operator control (V2V message transfer under operator control), a PSW (Pre-crash Sensing Warning, pre-crash sensing warning), V2X in areas outside network coverage (V2X in areas outside network coverage), a V2X road safety service via infrastructure (V2X Road safety service via infrastructure), V2I/V2N traffic flow optimization (V2I/V2N Traffic Flow Optimization), a CSW (Curve Speed Warning, curve speed warning), a warning to pedestrian against pedestrian collision (Warning to Pedestrian against Pedestrian Collision), VRU (Vulnerable Road User, vulnerable road user) safety, or the like. A quantity of examples/scenarios in the information may be increased or decreased, and different quantities of bits are occupied correspondingly.

The seventh identification information is used to identify a priority of the service data. For example, eight priorities may be obtained by means of classification for the service data. In this case, three bits are required to represent the information.

The eighth identification information is used to identify a communication resource pool for sending the service data. For example, currently, there are four resource pools, and correspondingly, two bits are required.

The ninth identification information is used to identify an offset location of the service data in a communication resource pool. The offset location of the service data in the communication resource pool specifically includes a frequency-domain offset and/or a time-domain offset. The frequency-domain offset is used to indicate a location, in the resource pool, of the service data scheduled by using/corresponding to/associated with the SA, or indicate a location, relative to an RB occupied by the SA, of the service data scheduled by using/corresponding to/associated with the SA, and is at least one bit. The time-domain offset is used to indicate a subframe offset, relative to a subframe in which the SA is located, of the data scheduled by using/corresponding to/associated with the SA.

The tenth identification information is used to identify a data size of the service data.

The eleventh identification information is used to identify a communication resource scheduling mode of the service data, such as a mode 1 and a mode 2. In the mode 1, an evolved NodeB schedules a resource. In the mode 2, UE selects a resource. If the resource in the mode 1 and the resource in the mode 2 overlap or are shared, a receiver may distinguish with the resources according to the identification information.

The twelfth identification information is used to identify a safety attribute of the service data, and is specifically used to identify whether the service data is safety-related or non-safety-related.

In a V2I/N communication scenario, when the first device is a roadside unit RSU and the second device is a vehicle, correspondingly, the attribute identification information may include information used to identify whether the RSU is an eNB or a non-mobile device other than an eNB.

In a V2I/N communication scenario, when the first device is a vehicle and the second device is a roadside unit RSU, correspondingly, the attribute identification information may include information used to identify whether the RSU is an eNB or a non-mobile device other than an eNB.

In a V2P communication scenario, when the first device is a road user and the second device is a vehicle, correspondingly, the attribute identification information may include information used to identify an individual type of the road user, for example, identify that the road user is a pedestrian, a person riding a bicycle, a driver, or a passenger.

In a V2P communication scenario, when the first device is a vehicle and the second device is a road user, correspondingly, the attribute identification information may include information used to identify an individual type of the road user, for example, identify that the road user is a pedestrian, a person riding a bicycle, a driver, or a passenger.

In a V2V communication scenario, when both the first device and the second device are vehicles, correspondingly, the attribute identification information includes at least one of the following information: information used to identify a location of the first device, information used to identify a moving speed of the first device, information used to identify an acceleration of the first device, information used to identify a motion direction of the first device, or information used to identify a lane in which the first device is located.

Step S12: The second device determines, according to the attribute identification information, whether the service data is data required by the second device.

After receiving the SA, the second device determines, according to the attribute identification information carried in the SA, whether the service data scheduled by using, associated with, or corresponding to the SA is the data required by the second device. For example, the second device determines, according to information carried in the SA, such as the type and the data size of the service data, whether the service data that the first device needs to send is the service data that the second device needs to receive.

Step S13: The second device receives the service data if the second device determines that the service data is the data required by the second device.

When the service data is in a same subframe with the SA and has been cached, the second device performs decoding processing on the service data.

When the service data and the SA are in different subframes, the second device receives the service data according to the SA, and decodes the received service data.

In this embodiment, after receiving the SA by means of blind detection, the second device determines, according to the attribute identification information in the SA, whether the service data scheduled by using, corresponding to, or associated with the SA is the data required by the second device. The second device receives the service data only when determining that the service data is the data required by the second device. The second device does not receive the service data when determining that the service data is not the data required by the second device.

It can be learned from the foregoing that, in this embodiment, as the receiver UE, the second device selectively receives service data, to reduce a workload of the second device in receiving service data, and reduce power consumption of the receive terminal.

FIG. 6 is a flowchart of a control signaling receiving method according to Embodiment 2 of the present invention. The method is applied to a D2D communication process, and is performed by a second device. The second device is receiver UE. The method in this embodiment includes the following specific steps.

Step S21: The second device receives control signaling SA sent by a first device, where the SA carries attribute identification information of service data that the first device needs to send and an identification ID of a target device.

In this embodiment, the attribute identification information is used to identify a related attribute of the service data scheduled by using, corresponding to, or associated with the SA, for example, a type or a data size of the service data.

The attribute identification information in this embodiment may be set according to an actual requirement and according to the manner described in Embodiment 1. Details are not described in this embodiment again.

The ID of the target device is used to identify an ID of a device that the first device needs to communicate with. There may be one ID of a device that the first device needs to communicate with, or there may be multiple IDs of devices that the first device needs to communicate with. Preferably, there are multiple IDs of devices that the first device needs to communicate with.

Step S22: The second device determines, according to the ID of the target device, whether the second device is a target device that the first device needs to communicate with.

When the SA includes the ID of the target device, the second device determines, according to the ID of the target device that is carried in the SA, whether the second device is the target device that the first device needs to communicate with.

Step S23: The second device determines, according to the attribute identification information, whether the service data is data required by the second device.

When the SA carries the attribute identification information of the service data, the second device determines, according to the attribute identification information carried in the SA, whether the service data is the data required by the second device.

Step S24: The second device receives the service data when determining results of both step S23 and step S24 are yes.

There is no sequence of performing step S22 and step S23. The second device receives the service data only when determining that both the two conditions are met. The second device does not receive the service data when determining that a determining result of either of the two steps is no.

In addition, the SA may include only the attribute identification information of the service data, or include only the ID of the target device, so that it is determined, according to the attribute identification information or the ID of the target device, whether to receive the service data.

When determining, according to the attribute identification information, whether to receive the service data, the second device presets a service data receiving condition. After receiving the SA, the second device determines, according to the attribute identification information, whether the service data meets the preset receiving condition. The second device receives the service data only when the service data meets the receiving condition that is preset by the second device.

For example, the receiving condition that is set by the receiver UE is receiving only a discovery signal. When the SA includes seventh identification information and a discovery resource pool is indicated according to the seventh identification information, the second device determines that the service data is a discovery signal, and the second device continues to receive a service scheduled by using/corresponding to/associated with the SA; otherwise, the second device does not continue to receive the service data scheduled by using/corresponding to/associated with the SA.

For another example, in a V2P communication scenario, the receiver UE receives only service data sent by a driver. When the transmitter UE identified in the attribute identification information is a driver, the receiver UE continues to receive the data scheduled by using/corresponding to/associated with the SA; otherwise, the receiver UE does not continue to receive the data scheduled by using/corresponding to/associated with the SA.

To reduce a quantity of times of blindly detecting the SA by the second device, a new format of control signaling SA is defined in this embodiment of the present invention, for example, is named as an SCI format 1. Preferably, a size (a total quantity of bits) of the SCI format 1 is the same as that of an existing SCI format 0. In this way, if the foregoing recommended field needs to be newly added, some fields need to be removed from the existing SCI format 0, or redundant/reserved states of some fields in the existing SCI format 0 need to be used. Specifically, at least one of the following methods may be used.

Redundant/reserved states 21 to 31 of an MCS field may be used. Because a sidelink does not support 64QAM, states 21 to 28 originally used to indicate 64QAM no longer have specific meanings, and may be used for another purpose. Original reserved states 29 to 31 may also be redefined.

When the SA and the service data are in a same subframe, the transmitter UE does not carry a T-RPT into the control signaling SA. Therefore, a T-RPT field may be reserved for carrying the attribute identification information of the service data.

A TA field is compressed. The TA field may be compressed from existing 11 bits to five bits, or compressed into another quantity of bits. Therefore, a timing adjustment granularity becomes larger, so that bit overheads are reduced.

The foregoing are merely examples. This embodiment of the present invention is not limited to deleting or compressing another existing field or using a redundant/reserved state of another existing field.

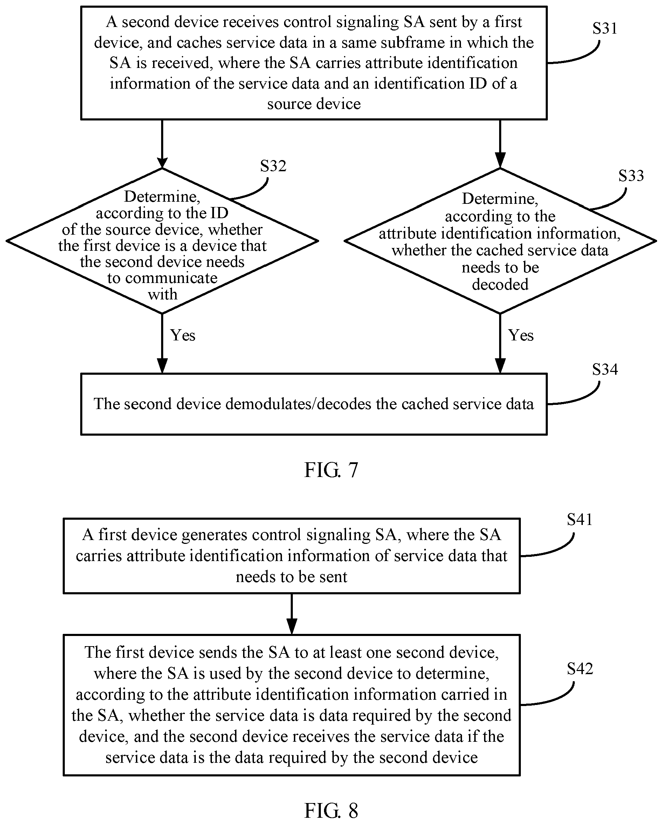

FIG. 7 is a flowchart of a control signaling receiving method according to Embodiment 3 of the present invention. The method is applied to a D2D communication process, and is performed by a second device. The second device is receiver UE. The method in this embodiment includes the following specific steps.

Step S31: The second device receives control signaling SA sent by a first device, and caches service data in a same subframe in which the SA is received, where the SA carries attribute identification information of the service data and an identification ID of a source device.

In this embodiment, the first device sends the SA and the service data in the same subframe. The second device receives the SA by means of blind detection, and caches the service data in the same subframe.

The attribute identification information carried in the SA is used to identify a related attribute of the cached service data, for example, a type or a data size of the service data.

Specifically, a type of the attribute identification information that may be carried in the SA is described as that in Embodiment 1. Details are not described in this embodiment again.

The ID of the source device is used to identify an ID of a terminal (that is, the first device) that sends the SA.

Step S32: The second device determines, according to the ID of the source device, whether the first device is a device that the second device needs to communicate with.

Step S33: The second device determines, according to the attribute identification information, whether the cached service data needs to be decoded.

Step S34: The second device demodulates/decodes the cached service data when determining results of both step S32 and step S33 are yes.

There is no sequence of performing step S32 and step S33. The second device decodes the cached service data only when determining that both the two conditions are met. The second device does not decode the service data when determining that a determining result of either of the two steps is no.

In addition, the SA may include only the attribute identification information of the service data, or include only the ID of the source device, so that it is determined, according to the attribute identification information or the ID of the source device, whether to decode the service data.

In this embodiment, the second device presets a service data receiving condition. After receiving the SA, the second device determines, according to the attribute identification information, whether the service data meets the preset receiving condition. The second device receives the service data only when the service data meets the receiving condition that is preset by the second device.

In this embodiment, the attribute identification information is located in at least one of the following fields of the SA:
a modulation and coding scheme MCS field;
some code bits of a timing advance TA field; or
a time position of data resource T-RPT field.

The foregoing are merely examples. This embodiment of the present invention is not limited to deleting or compressing another existing field or using a redundant/reserved state of another existing field.

FIG. 8 is a flowchart of a control signaling sending method according to Embodiment 1 of the present invention. The method is applied to a D2D communication process, and is performed by a first device. The first device is transmitter UE. The method in this embodiment includes the following specific steps.

Step S41: The first device generates control signaling SA, where the SA carries attribute identification information of service data that needs to be sent.

Step S42: The first device sends the SAto at least one second device, where the SAis used by the second device to determine, according to the attribute identification information carried in the SA, whether the service data is data required by the second device, and the second device receives the service data if the service data is the data required by the second device.

In an embodiment of the present invention, the SA sent by the first device further carries an identification ID of a target device, and is used by the second device to determine, according to the ID of the target device, whether the second device is a target device that the first device needs to communicate with. The second device receives the service data if the second device is the target device that the first device needs to communicate with and the service data is the data required by the second device.

In an embodiment of the present invention, the SA sent by the first device further carries an identification ID of a source device, and is used by the second device to determine, according to the ID of the source device, whether the first device is a device that the second device needs to communicate with. The second device receives the service data if the first device is the device that the second device needs to communicate with and the service data is the data required by the second device.

In an embodiment of the present invention, the attribute identification information carried in the SA sent by the first device includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

In an embodiment of the present invention, the attribute identification information is located in at least one of the following fields of the SA:
a modulation and coding scheme MCS field;
some code bits of a timing advance TA field; or
a time position of data resource T-RPT field.

The foregoing are merely examples. This embodiment of the present invention is not limited to deleting or compressing another existing field or using a redundant/reserved state of another existing field.

In an embodiment of the present invention, specific content in the attribute identification information is set according to an actual D2D communication application scenario.

For example, the first device is a roadside unit RSU, and the second device is a vehicle; and
correspondingly, the attribute identification information includes information used to identify whether the RSU is an eNB or a non-mobile device other than an eNB.

For example, the first device is a vehicle, and the second device is a roadside unit RSU; and
correspondingly, the attribute identification information includes information used to identify whether the RSU is an eNB or a non-mobile device other than an eNB.

For example, the first device is a road user, and the second device is a vehicle; and
correspondingly, the attribute identification information includes information used to identify an individual type of the road user.

For example, the first device is a vehicle, and the second device is a road user; and
correspondingly, the attribute identification information includes information used to identify an individual type of the road user.

For example, both the first device and the second device are vehicles; and
correspondingly, the attribute identification information includes at least one of the following information: information used to identify a location of the first device, information used to identify a moving speed of the first device, information used to identify an acceleration of the first device, information used to identify a motion direction of the first device, or information used to identify a lane in which the first device is located.

A setting manner and meanings of the attribute identification information in this embodiment are the same as those in Embodiment 1 of the control signaling receiving method. Details are not described in this embodiment again.

The attribute identification information that is of the service data and that is carried by the transmitter UE into the SA is used by the receiver UE to decide, according to the attribute identification information after the SA is correctly received, whether to further demodulate/decode or receive the data scheduled by using/corresponding to/associated with the SA.

The control signaling processing method in the present invention may be applied to systems such as D2D, V2X, and M2M (Machine to Machine, machine-to-machine), to reduce a demodulation/decoding workload of receive end UE, power consumption of the receiver UE, and complexity of the receiver UE.

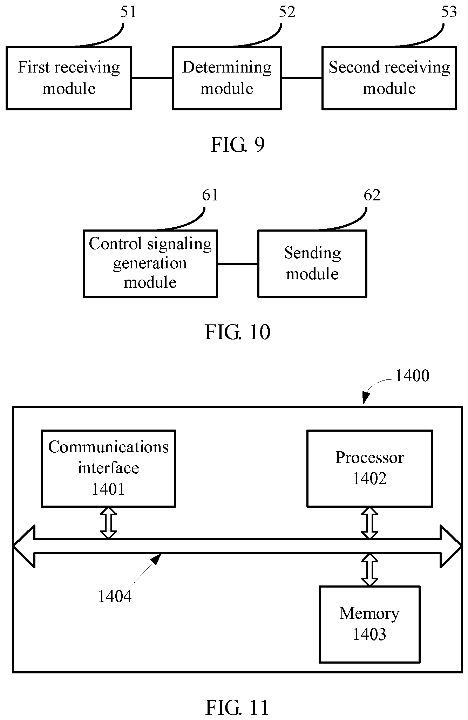

FIG. 9 is a schematic structural diagram of a control signaling receiving apparatus according to Embodiment 1 of the present invention. The apparatus is deployed in a device-to-device D2D communications network. A main structure includes a first receiving module 51, a determining module 52, and a second receiving module 53. The first receiving module 51 is configured to receive control signaling SA sent by a first device, where the SA carries attribute identification information of service data that the first device needs to send. The determining module 52 is configured to determine, according to the attribute identification information, whether the service data is data required by the receiving apparatus. The second receiving module 53 is configured to receive the service data when the service data is the data required by the receiving apparatus.

In the foregoing embodiment, the control signaling receiving apparatus further includes a first verification module. The SA further carries an identification ID of a target device. The first verification module is configured to determine, according to the ID of the target device, whether the receiving apparatus is a target device that the first device needs to communicate with. The receiving apparatus receives the service data if the receiving apparatus is the target device that the first device needs to communicate with and the service data is the data required by the receiving apparatus.

In the foregoing embodiment, the control signaling receiving apparatus further includes a second verification module. The SA further carries an identification ID of a source device. The second verification module is configured to determine, according to the ID of the source device, whether the first device is a device that the receiving apparatus needs to communicate with. The receiving apparatus receives the service data if the first device is the device that the receiving apparatus needs to communicate with and the service data is the data required by the receiving apparatus.

In the foregoing embodiment, the attribute identification information includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

In the foregoing embodiment, the attribute identification information is located in at least one of the following fields of the SA:
a modulation and coding scheme MCS field;
some code bits of a timing advance TA field; or
a time position of data resource T-RPT field.

In the foregoing embodiment, the determining module 52 is specifically configured to: determine, according to the attribute identification information, whether the service data meets a receiving condition that is preset by the receiving apparatus; and if the service data meets the receiving condition that is preset by the receiving apparatus, determine that the service data is the data required by the receiving apparatus.

In the foregoing embodiment, the second receiving module 53 is specifically configured to: receive the service data according to the SA, and decode the received service data; or
the second receiving module 53 is specifically configured to decode the service data that has been received or cached.

In the foregoing embodiment, the first device is a roadside unit RSU, and the receiving apparatus is a vehicle; and
correspondingly, the attribute identification information includes information used to identify whether the RSU is an eNB or a non-mobile device other than an eNB; or
the first device is a vehicle, and the receiving apparatus is a roadside unit RSU; and
correspondingly, the attribute identification information includes information used to identify whether the RSU is an eNB or a non-mobile device other than an eNB; or
the first device is a road user, and the receiving apparatus is a vehicle; and
correspondingly, the attribute identification information includes information used to identify an individual type of the road user; or
the first device is a vehicle, and the receiving apparatus is a road user; and
correspondingly, the attribute identification information includes information used to identify an individual type of the road user; or
both the first device and the receiving apparatus are vehicles; and
correspondingly, the attribute identification information includes at least one of the following information: information used to identify a location of the first device, information used to identify a moving speed of the first device, information used to identify an acceleration of the first device, information used to identify a motion direction of the first device, or information used to identify a lane in which the first device is located.

FIG. 10 is a schematic structural diagram of a control signaling sending apparatus according to an embodiment of the present invention. The apparatus is deployed in a device-to-device D2D communications network. A main structure includes a control signaling generation module 61 and a sending module 62. The control signaling generation module 61 is configured to generate control signaling SA, where the SA carries attribute identification information of service data that needs to be sent. The sending module 62 is configured to send the SA to at least one second device, where the SA is used by the second device to determine, according to the attribute identification information carried in the SA, whether the service data is data required by the second device. The second device receives the service data if the service data is the data required by the second device.

In the foregoing embodiment, the SA further carries an identification ID of a target device, and is used by the second device to determine, according to the ID of the target device, whether the second device is a target device that the sending apparatus needs to communicate with. The second device receives the service data if the second device is the target device that the sending apparatus needs to communicate with and the service data is the data required by the second device.

In the foregoing embodiment, the SA further carries an identification ID of a source device, and is used by the second device to determine, according to the ID of the source device, whether the sending apparatus is a device that the second device needs to communicate with. The second device receives the service data if the sending apparatus is the device that the second device needs to communicate with and the service data is the data required by the second device.

In the foregoing embodiment, the attribute identification information includes at least one of the following information:
first identification information, used to identify whether the service data is periodically-sent data or event-triggered data;
second identification information, used to identify a transmission interval of the service data or a quantity of times of triggering the service data;
third identification information, used to identify a device type of the sending apparatus;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

In the foregoing embodiment, the attribute identification information is located in at least one of the following fields of the SA:
a modulation and coding scheme MCS field;
some code bits of a timing advance TA field; or
a time position of data resource T-RPT field.

In the foregoing embodiment, the sending apparatus is a roadside unit RSU, and the second device is a vehicle; and
correspondingly, the attribute identification information includes information used to identify whether the RSU is an eNB or a non-mobile device other than an eNB; or
the sending apparatus is a vehicle, and the second device is a roadside unit RSU; and
correspondingly, the attribute identification information includes information used to identify whether the RSU is an eNB or a non-mobile device other than an eNB; or
the sending apparatus is a road user, and the second device is a vehicle; and
correspondingly, the attribute identification information includes information used to identify an individual type of the road user; or
the sending apparatus is a vehicle, and the second device is a road user; and
correspondingly, the attribute identification information includes information used to identify an individual type of the road user; or
both the sending apparatus and the second device are vehicles; and
correspondingly, the attribute identification information includes at least one of the following information: information used to identify a location of the sending apparatus, information used to identify a moving speed of the sending apparatus, information used to identify an acceleration of the sending apparatus, information used to identify a motion direction of the sending apparatus, or information used to identify a lane in which the sending apparatus is located.

FIG. 11 is a schematic structural diagram of a terminal device according to Embodiment 1 of the present invention. The terminal device is deployed in a D2D communications network. The terminal device 1400 includes a communications interface 1401, a memory 1403, and a processor 1402. The communications interface 1401, the processor 1402, and the memory 1403 are connected to each other by using a bus 1404. The bus 1404 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, or the like. For ease of representation, the bus is represented by using only one bold line in FIG. 11. However, it does not mean that there is only one bus or one type of bus.

The communications interface 1401 is configured to communicate with a transmit end. The memory 1403 is configured to store a program. Specifically, the program may include program code, and the program code includes a computer operation instruction. The memory 1403 may include a random access memory (random access memory, RAM for short), or may include a nonvolatile memory (non-volatile memory), for example, at least one magnetic disk storage.

The processor 1402 executes the program stored in the memory 1403, to perform the method in the foregoing method embodiment of the present invention:
receiving control signaling SA sent by a first device, where the SA carries attribute identification information of service data that the first device needs to send;
determining, according to the attribute identification information, whether the service data is data required by the terminal device; and
receiving, by the terminal device, the service data if the service data is the data required by the terminal device.

The processor 1402 may be a general-purpose processor, including a central processing unit (Central Processing Unit, CPU for short), a network processor (Network Processor, NP for short), or the like; or may be a digital signal processor (DSP), an application-specific integrated circuit (ASIC), a field programmable gate array (FPGA) or another programmable logic device, a discrete gate or a transistor logic device, or a discrete hardware component.

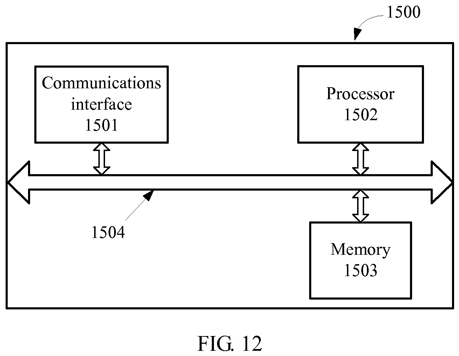

FIG. 12 is a schematic structural diagram of a terminal device according to Embodiment 2 of the present invention. The terminal device is deployed in a D2D communications network. The terminal device 1500 includes a communications interface 1501, a memory 1503, and a processor 1502. The communications interface 1501, the processor 1502, and the memory 1503 are connected to each other by using a bus 1504. The bus 1504 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, or the like. For ease of representation, the bus is represented by using only one bold line in FIG. 12. However, it does not mean that there is only one bus or one type of bus.

The communications interface 1501 is configured to communicate with a transmit end. The memory 1503 is configured to store a program. Specifically, the program may include program code, and the program code includes a computer operation instruction. The memory 1503 may include a random access memory (random access memory, RAM for short), or may include a nonvolatile memory (non-volatile memory), for example, at least one magnetic disk storage.

The processor 1502 executes the program stored in the memory 1503, to perform the method in the foregoing method embodiment of the present invention:
generating control signaling SA, where the SA carries attribute identification information of service data that needs to be sent; and
broadcasting the SA to a second device, where the SA is used by the second device to determine, according to the attribute identification information carried in the SA, whether the service data is data required by the second device, and the second device receives the service data if the service data is the data required by the second device.

The processor 1502 may be a general-purpose processor, including a central processing unit (Central Processing Unit, CPU for short), a network processor (Network Processor, NP for short), or the like; or may be a digital signal processor (DSP), an application-specific integrated circuit (ASIC), a field programmable gate array (FPGA) or another programmable logic device, a discrete gate or a transistor logic device, or a discrete hardware component.

The apparatus and device in the embodiments may be configured to correspondingly perform the technical solutions in the foregoing method embodiments. Implementation principles and technical effects of the apparatus and device are similar to those of the technical solutions in the foregoing method embodiments. Details are not described herein again.

According to the control signaling processing method, apparatus, and device in the embodiments of the present invention, the first device is corresponding to transmitter UE, and the second device is corresponding to receiver UE. The second device determines, according to the attribute identification information in the received SA, whether the service data is the data required by the second device. The second device receives only the data required by the second device. This avoids a related-art case in which receiver UE cannot identify an attribute of service data and therefore receives or demodulates data that is not required by the receiver UE. Therefore, a workload of the receiver UE in a data receiving process is reduced, and reception complexity and power consumption of the receiver UE are reduced.

Persons of ordinary skill in the art may understand that all or some of the steps of the method embodiments may be performed by a program instructing relevant hardware. The program may be stored in a computer-readable storage medium. When the program runs, the steps in the method embodiments are performed. The storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A control signaling receiving method, wherein the method is applied to a device-to-device D2D communication process, and the method comprises:
receiving, by a second device, control signaling SA sent by a first device, wherein the SA carries attribute identification information of service data that the first device needs to send;
determining, by the second device according to the attribute identification information, whether the service data is data required by the second device; and
receiving, by the second device, the service data if the service data is the data required by the second device.

2. The method according to claim 1, wherein the SA further carries an identification ID of a target device; and
the method further comprises:
determining, by the second device according to the ID of the target device, whether the second device is a target device that the first device needs to communicate with; and
receiving, by the second device, the service data if the second device is the target device that the first device needs to communicate with and the service data is the data required by the second device.

3. The method according to claim 1 or 2, wherein the SA further carries an identification ID of a source device; and
the method further comprises:
determining, by the second device according to the ID of the source device, whether the first device is a device that the second device needs to communicate with; and
receiving, by the second device, the service data if the first device is the device that the second device needs to communicate with and the service data is the data required by the second device.

4. The method according to any one of claims 1 to 3, wherein the attribute identification information comprises at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

5. The method according to any one of claims 1 to 4, wherein the attribute identification information is located in at least one of the following fields of the SA:
a modulation and coding scheme MCS field;
some code bits of some code bits of a timing advance TA field; or
a time position of data resource T-RPT field.

6. The method according to any one of claims 1 to 5, wherein the determining, by the second device according to the attribute identification information, whether the service data is data required by the second device comprises:
determining, by the second device according to the attribute identification information, whether the service data meets a receiving condition that is preset by the second device; and
if the service data meets the receiving condition that is preset by the second device, determining that the service data is the data required by the second device.

7. The method according to any one of claims 1 to 6, wherein the receiving, by the second device, the service data comprises:
receiving, by the second device, the service data according to the SA, and decoding the received service data; or
decoding, by the second device, the service data that has been received or cached by the second device.

8. The method according to any one of claims 1 to 7, wherein the first device is a roadside unit RSU, and the second device is a vehicle; and
correspondingly, the attribute identification information comprises information used to identify whether the RSU is an evolved NodeB or a non-mobile device other than an evolved NodeB; or
the first device is a vehicle, and the second device is a roadside unit RSU; and
correspondingly, the attribute identification information comprises information used to identify whether the RSU is an evolved NodeB or a non-mobile device other than an evolved NodeB; or
the first device is a road user, and the second device is a vehicle; and
correspondingly, the attribute identification information comprises information used to identify an individual type of the road user; or
the first device is a vehicle, and the second device is a road user; and
correspondingly, the attribute identification information comprises information used to identify an individual type of the road user; or
both the first device and the second device are vehicles; and
correspondingly, the attribute identification information comprises at least one of the following information: information used to identify a location of the first device, information used to identify a moving speed of the first device, information used to identify an acceleration of the first device, information used to identify a motion direction of the first device, or information used to identify a lane in which the first device is located.

9. A control signaling sending method, wherein the method is applied to a device-to-device D2D communication process, and the method comprises:
generating, by a first device, control signaling SA, wherein the SA carries attribute identification information of service data that needs to be sent; and
sending, by the first device, the SA to at least one second device, wherein the SA is used by the second device to determine, according to the attribute identification information carried in the SA, whether the service data is data required by the second device, and the second device receives the service data if the service data is the data required by the second device.

10. The method according to claim 9, wherein the SA further carries an identification ID of a target device, and is used by the second device to determine, according to the ID of the target device, whether the second device is a target device that the first device needs to communicate with; and the second device receives the service data if the second device is the target device that the first device needs to communicate with and the service data is the data required by the second device.

11. The method according to claim 9 or 10, wherein the SA further carries an identification ID of a source device, and is used by the second device to determine, according to the ID of the source device, whether the first device is a device that the second device needs to communicate with; and the second device receives the service data if the first device is the device that the second device needs to communicate with and the service data is the data required by the second device.

12. The method according to any one of claims 9 to 11, wherein the attribute identification information comprises at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

13. The method according to any one of claims 9 to 12, wherein the attribute identification information is located in at least one of the following fields of the SA:
a modulation and coding scheme MCS field;
some code bits of a timing advance TA field; or
a time position of data resource T-RPT field.

14. The method according to any one of claims 9 to 13, wherein the first device is a roadside unit RSU, and the second device is a vehicle; and
correspondingly, the attribute identification information comprises information used to identify whether the RSU is an evolved NodeB or a non-mobile device other than an evolved NodeB; or
the first device is a vehicle, and the second device is a roadside unit RSU; and
correspondingly, the attribute identification information comprises information used to identify whether the RSU is an evolved NodeB or a non-mobile device other than an evolved NodeB; or
the first device is a road user, and the second device is a vehicle; and
correspondingly, the attribute identification information comprises information used to identify an individual type of the road user; or
the first device is a vehicle, and the second device is a road user; and
correspondingly, the attribute identification information comprises information used to identify an individual type of the road user; or
both the first device and the second device are vehicles; and
correspondingly, the attribute identification information comprises at least one of the following information: information used to identify a location of the first device, information used to identify a moving speed of the first device, information used to identify an acceleration of the first device, information used to identify a motion direction of the first device, or information used to identify a lane in which the first device is located.

15. A control signaling receiving apparatus, wherein the apparatus is deployed in a device-to-device D2D communications network, and the apparatus comprises:
a first receiving module, configured to receive control signaling SA sent by a first device, wherein the SA carries attribute identification information of service data that the first device needs to send;
a determining module, configured to determine, according to the attribute identification information, whether the service data is data required by the receiving apparatus; and
a second receiving module, configured to receive the service data when the service data is the data required by the receiving apparatus.

16. The apparatus according to claim 15, further comprising a first verification module;
the SA further carries an identification ID of a target device, and the first verification module is configured to determine, according to the ID of the target device, whether the receiving apparatus is a target device that the first device needs to communicate with; and
the receiving apparatus receives the service data if the receiving apparatus is the target device that the first device needs to communicate with and the service data is the data required by the receiving apparatus.

17. The apparatus according to claim 15 or 16, further comprising a second verification module;
the SA further carries an identification ID of a source device;
the second verification module is configured to determine, according to the ID of the source device, whether the first device is a device that the receiving apparatus needs to communicate with; and
the receiving apparatus receives the service data if the first device is the device that the receiving apparatus needs to communicate with and the service data is the data required by the receiving apparatus.

18. The apparatus according to any one of claims 15 to 17, wherein the attribute identification information comprises at least one of the following information:
first identification information, used to identify whether the service data is periodically-sent data or event-triggered data;
second identification information, used to identify a transmission interval of the service data or a quantity of times of triggering the service data;
third identification information, used to identify a device type of the first device;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

19. The apparatus according to any one of claims 15 to 18, wherein the attribute identification information is located in at least one of the following fields of the SA:
a modulation and coding scheme MCS field;
some code bits of a timing advance TA field; or
a time position of data resource T-RPT field.

20. The apparatus according to any one of claims 15 to 19, wherein the determining module is specifically configured to: determine, according to the attribute identification information, whether the service data meets a receiving condition that is preset by the receiving apparatus; and if the service data meets the receiving condition that is preset by the receiving apparatus, determine that the service data is the data required by the receiving apparatus.

21. The apparatus according to any one of claims 15 to 20, wherein the second receiving module is specifically configured to: receive the service data according to the SA, and decode the received service data; or
the second receiving module is specifically configured to decode the service data that has been received or cached.

22. The apparatus according to any one of claims 15 to 21, wherein the first device is a roadside unit RSU, and the receiving apparatus is a vehicle; and
correspondingly, the attribute identification information comprises information used to identify whether the RSU is an evolved NodeB or a non-mobile device other than an evolved NodeB; or
the first device is a vehicle, and the receiving apparatus is a roadside unit RSU; and correspondingly, the attribute identification information comprises information used to identify whether the RSU is an evolved NodeB or a non-mobile device other than an evolved NodeB; or
the first device is a road user, and the receiving apparatus is a vehicle; and
correspondingly, the attribute identification information comprises information used to identify an individual type of the road user; or
the first device is a vehicle, and the receiving apparatus is a road user; and correspondingly, the attribute identification information comprises information used to identify an individual type of the road user; or
both the first device and the receiving apparatus are vehicles; and
correspondingly, the attribute identification information comprises at least one of the following information: information used to identify a location of the first device, information used to identify a moving speed of the first device, information used to identify an acceleration of the first device, information used to identify a motion direction of the first device, or information used to identify a lane in which the first device is located.

23. A control signaling sending apparatus, wherein the apparatus is deployed in a device-to-device D2D communications network, and the apparatus comprises:
a control signaling generation module, configured to generate control signaling SA, wherein the SA carries attribute identification information of service data that needs to be sent; and
a sending module, configured to send the SA to at least one second device, wherein the SA is used by the second device to determine, according to the attribute identification information carried in the SA, whether the service data is data required by the second device, and the second device receives the service data if the service data is the data required by the second device.

24. The apparatus according to claim 23, wherein the SA further carries an identification ID of a target device, and is used by the second device to determine, according to the ID of the target device, whether the second device is a target device that the sending apparatus needs to communicate with; and the second device receives the service data if the second device is the target device that the sending apparatus needs to communicate with and the service data is the data required by the second device.

25. The apparatus according to claim 23 or 24, wherein the SA further carries an identification ID of a source device, and is used by the second device to determine, according to the ID of the source device, whether the sending apparatus is a device that the second device needs to communicate with; and the second device receives the service data if the sending apparatus is the device that the second device needs to communicate with and the service data is the data required by the second device.

26. The apparatus according to any one of claims 23 to 25, wherein the attribute identification information comprises at least one of the following information:
first identification information, used to identify whether the service data is periodically-sent data or event-triggered data;
second identification information, used to identify a transmission interval of the service data or a quantity of times of triggering the service data;
third identification information, used to identify a device type of the sending apparatus;
fourth identification information, used to identify a device type of the target device;
fifth identification information, used to identify a data type of the service data;
sixth identification information, used to identify an application scenario of the service data;
seventh identification information, used to identify a priority of the service data;
eighth identification information, used to identify a communication resource pool for sending the service data;
ninth identification information, used to identify an offset location of the service data in a communication resource pool;
tenth identification information, used to identify a data size of the service data;
eleventh identification information, used to identify a communication resource scheduling mode of the service data; or
twelfth identification information, used to identify a safety attribute of the service data.

27. The apparatus according to any one of claims 23 to 26, wherein the attribute identification information is located in at least one of the following fields of the SA:
a modulation and coding scheme MCS field;
some code bits of a timing advance TA field; or
a time position of data resource T-RPT field.

28. The apparatus according to any one of claims 23 to 27, wherein the sending apparatus is a roadside unit RSU, and the second device is a vehicle; and
correspondingly, the attribute identification information comprises information used to identify whether the RSU is an evolved NodeB or a non-mobile device other than an evolved NodeB; or
the sending apparatus is a vehicle, and the second device is a roadside unit RSU; and correspondingly, the attribute identification information comprises information used to identify whether the RSU is an evolved NodeB or a non-mobile device other than an evolved NodeB; or
the sending apparatus is a road user, and the second device is a vehicle; and correspondingly, the attribute identification information comprises information used to identify an individual type of the road user; or
the sending apparatus is a vehicle, and the second device is a road user; and correspondingly, the attribute identification information comprises information used to identify an individual type of the road user; or
both the sending apparatus and the second device are vehicles; and
correspondingly, the attribute identification information comprises at least one of the following information: information used to identify a location of the sending apparatus, information used to identify a moving speed of the sending apparatus, information used to identify an acceleration of the sending apparatus, information used to identify a motion direction of the sending apparatus, or information used to identify a lane in which the sending apparatus is located.

29. A terminal device, wherein the terminal device is deployed in a D2D communications network, and the terminal device comprises:
a communications interface, a memory, a processor, and a communications bus, wherein the communications interface, the memory, and the processor communicate with each other by using the communications bus; and
the memory is configured to store a program, the processor is configured to execute the program stored in the memory, and when the terminal device runs, the processor runs the program, wherein the program comprises:
receiving control signaling SA sent by a first device, wherein the SA carries attribute identification information of service data that the first device needs to send;
determining, according to the attribute identification information, whether the service data is data required by the terminal device; and
receiving, by the terminal device, the service data if the service data is the data required by the terminal device.

30. A terminal device, wherein the terminal device is deployed in a D2D communications network, and the terminal device comprises:
a communications interface, a memory, a processor, and a communications bus, wherein the communications interface, the memory, and the processor communicate with each other by using the communications bus; and
the memory is configured to store a program, the processor is configured to execute the program stored in the memory, and when the terminal device runs, the processor runs the program, wherein the program comprises:
generating control signaling SA, wherein the SA carries attribute identification information of service data that needs to be sent; and
broadcasting the SA to at least one second device, wherein the SA is used by the second device to determine, according to the attribute identification information carried in the SA, whether the service data is data required by the second device, and the second device receives the service data if the service data is the data required by the second device.
